# EUROPEAN PATENT SPECIFICATION

(11) **EP 0 448 315 B1**
(45) Date of publication and mention of the grant of the patent: **28.08.1996**
(21) Application number: 91302285.1
(22) Date of filing: 18.03.1991
(51) Int. Cl.: G05D 23/13

(54) **Improved thermostatic mixing valve**
Thermostatisches Mischventil
Vanne de mélange thermostatique

(30) Priority: 17.03.1990 GB 9006069
(43) Date of publication of application: 25.09.1991
(73) Proprietor: THE HORNE ENGINEERING CO. LTD., Johnstone PA5 8BD (GB)
(72) Inventor: Reid, William, Elderslie, Scotland PA5 9NL (GB)
(74) Representative: Moreland, David, Dr.

(56) References cited:
- FR-E- 92 539
- GB-A- 2 022 785

## Description

The present invention relates to a thermostatic mixing valve.

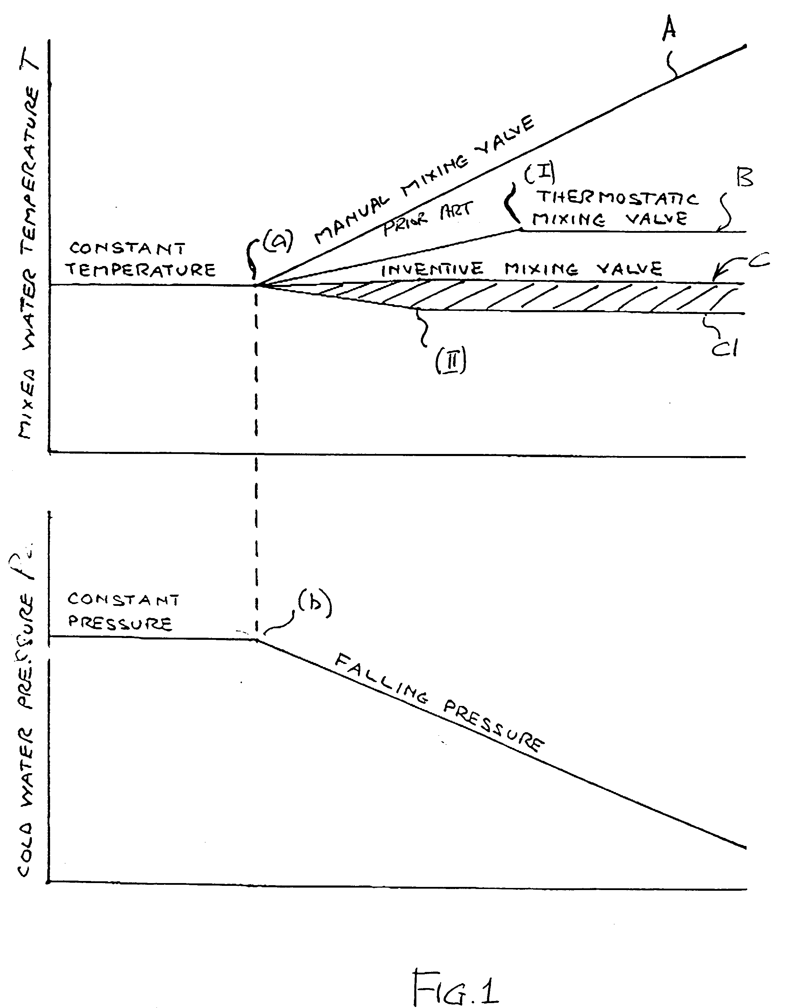

A basic form of mixing valve for supplying hot/cold mixed water comprises a simple manual device wherein manual taps control the relative flows of hot and cold water to a mixing zone of the device. The valve will be designed for operation with particular hot and cold fluid pressures i.e. for hot/cold presure differential within a certain limit. More especially the supply pressure of the hot and cold fluids preferably should be approximately the same essentially giving a zero pressure differential. Frequently however the cold fluid pressure can fall due to an increase demand situation and if the cold water pressure decreases the flow of cold water entering the mixing device will also decrease, but the hot water flow will remain constant if the hot water pressure remains unchanged. This could result in a temperature rise in the discharged mixed water (as shown in graph A in the attached Fig. 1) requiring adjustment of the tap settings to restore the original temperature. In the case of a thermostatic mixing valve, the relative hot and cold fluid flows are controlled by valve meanss which are set by a thermal responsive element and the above problem is to some degree ameliorated. Such a thermostatic mixing valve is set out in the preamble of appended claim 1 and an example of such a valve is described in FR-A-92 539. In particular the thermostatic valve of FR-A-92 539 comprises a cylindrical slide valve movable by a thermostatic control between end walls defining valve seatings whereby controlled flows of hot and cold fluids are fed to the thermostatic control via ducting, the ducting being such as to produce opposing flows of hot and cold fluid for mixing in a mixing zone at a thermal responsive element or member of the thermostatic control. Thus in the prior art thermostatic valve the increased temperature of the mixed water will expand the thermal responsive element which consequently alters the setting of the valve means to decrease the hot water flow and increase the cold water flow (still at reduced pressure) entering the valve, and eventually equilibrium conditions will exist with the thermal element at a new expanded condition and the valve means set correspondingly. In previous thermostatic mixing valves a definite rise of temperature at the mixed water discharge still occurred when there was a pressure drop in the cold water supply, although not as severe as for the case of the manual device. In particular the hot and cold water flow arrangement in the thermostatic valve of FR-A-92 539 may only reduce this problem by a very limited degree.

It is an object of the present invention to provide a thermostatic mixing valve which deals with the above problem in a more effective manner. This object is met by the provision of a thermostatic valve having the features of the characterising clause of the appended claim 1.

Preferably the ducting introduces the cold fluid to the thermal responsive member upstream from the introduction of the mixed fluid to said thermal responsive member thereby forming said first and second portions of the thermal responsive members.

In a preferred embodiment, the valve means comprises an annular member located between opposed seatings whereby the hot and cold inlets are defined between said annular member and respective seatings. Preferably the hot fluid flows between the annular valve member and a sleeve surrounding the thermal responsive means towards the reversal zone so as to reverse at said reversal zone at an end of said sleeve for the creating of a mixed flow over the thermal responsive members, the cold fluid being introduced to the thermal responsibe member, upstream from said reversal zone of the hot fluid.

Embodiments of the present invention will now be described by way of example with reference to the accompanying drawings wherein:
Fig. 1 shows graphs of blended water temperature with regard to the pressure of the cold water supply, for prior art mixing and a valve according to the present invention;
Fig. 2 shows a sectional elevation of a thermostatic mixing valve according to one embodiment of the present invention;
Figs. 3A, 3B and 3C show schematically the operative conditions at the thermal responsive element for the present valve and a prior art thermostatic valve respectively; and
Fig. 4 shows a view similar to Fig. 2 for another embodiment.

Fig 1 shows graph (A-C) produced by tests on various mixing valve to plot the mixed water temperature against falling cold water supply pressure PC. The various terms in the graphs are defined as follows: COLD WATER PRESSURE is the pressure at the cold inlet to a mixing valve.

CONSTANT PRESSURE indicates a steady or constant pressure at the cold inlet to a mixing valve.

FALLING PRESSURE indicates a fall or reduction in the cold water pressure at the cold inlet to a mixing valve. It is assumed that the hot water pressure at the hot inlet to the mixing valve remains steady or constant and does not rise or fall.

MIXED WATER TEMPERATURE is the temperature at the outlet from a mixing valve after hot water and cold water have been mixed in the valve.

CONSTANT TEMPERATURE indicates a constant or steady temperature of mixed water at the outlet from a mixing valve when a tap or outlet is opened and the valve is running at its normal flow rate.

MANUAL MIXING VALVE indicates a steady rise in mixed water temperature at the outlet from a manual mixing valve as the cold water pressure at the inlet of that valve falls. A manual mixing valve could be in the form of a monobloc tap or it could be a single outlet tap which has individual hot and cold inlets to it so that the hot water and cold water can be turned on independently to mix in the tap before discharge into a basin or bath.

PRIOR ART THERMOSTATIC MIXING VALVE indicates a temperature rise of the mixed water leaving this valve when the cold water pressure falls and then at point (I) the rise in temperature reaches a limit and becomes steady provided the cold water pressure does not fall any further and remains steady. This temperature however is higher than the original constant temperature and is invariably unacceptably high.

INVENTIVE MIXING VALVE indicates the characteristic of the valves now described. This graph shows a very small rise in temperature or a fall in temperature as the cold water pressure falls. At the point (II) the inventive mixing valve will control the mixed water at a constant temperature. Any rise in temperature will be substantially less than the rise in temperature from a conventional thermostatic mixing valve. Any fall in temperature will be small.

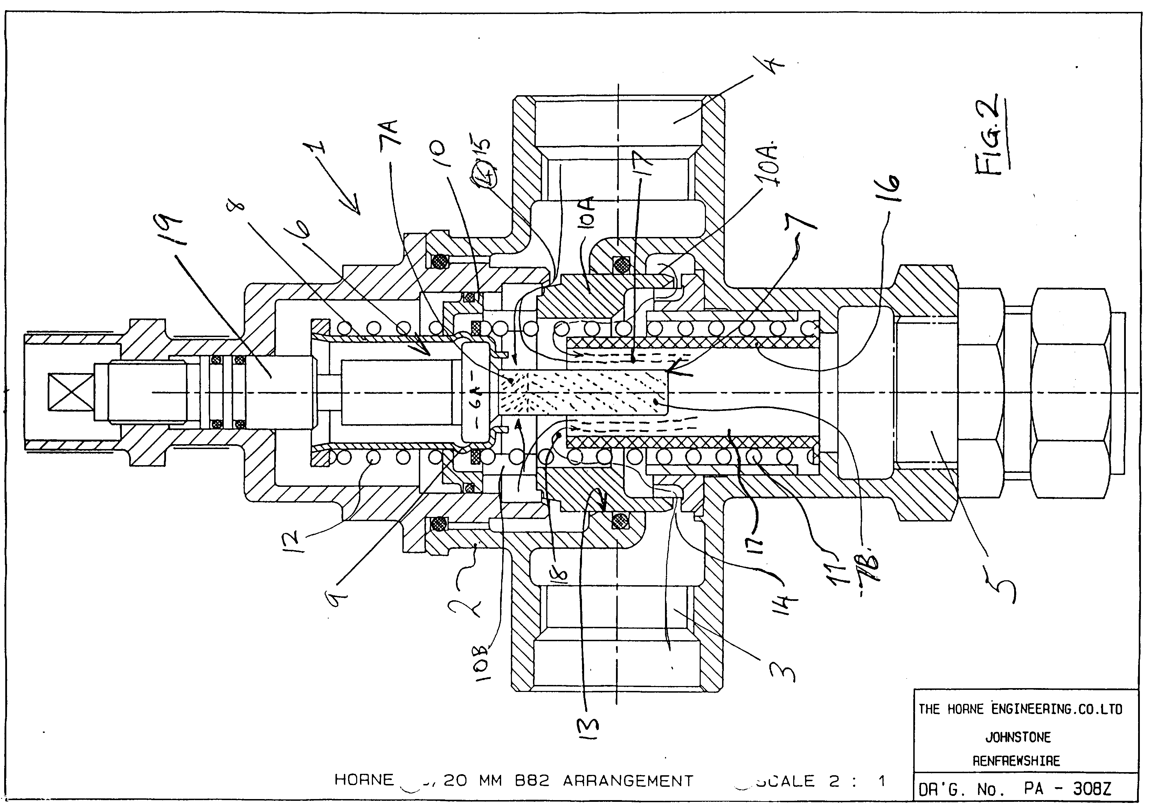

Referring to Fig 2, a thermostatic mixing valve 1 comprises a casing 2 providing inlet ducts 3,4 for relatively hot and cold fluids (eg water) respectively while mixed water is discharged via a duct 5. The temperature of controller 6 including a temperature responsive (thermostatic) element 7. A flange 6A of the controller 7 is carried by an open bottomed cup 8 and an annular ridge 9 on the cup 8 engages the top end of a slide valve device 10 whereby the device 10 is actuated by the controller 6, the device 10 being positioned by the thermostat element 7 and a return compression spring 11. The valve device 10 includes an annular head 10A sealingly slidable on a cylindrical surface 13 and located between valve seatings so as to define with the seatings a hot inlet 14 and a cold inlet 15 respectively. The thermostat element 7 expands against the compression spring 11 and when the element contracts the compression spring pushes the slide valve device 10 back into a position where a pin of the element 7 is pushed back into the element after it has contracted.

A compression spring 12 serving as an overheat spring is provided to protect the element 7 from damage. Thus if the temperature of the water or fluid surrounding the element causes the element to expand to such an extent that the slide valve device has closed the hot inlet 14 any excess expansion after this closure is absorbed by the compression spring 12. A tubular sleeve 16 surrounds the element 7 such that a passage 17 for downward flow of mixed fluid is located between the sleeve 16 and the element 7. Ducting 10C, partly between the sleeve 16 and the head 10A, serves to deliver the hot water to the passage 17, to this end the hot water reversing at a reverse zone 18 at the top of the sleeve 16, while the cold water is introduced across the top of the head 10A ie upstream from above the reversal zone 18 so as to pass radially onto a top part 7A of the element 7 via ports 10B in the device 10. By this arrangement, the element 7 is divided into two operative portions, namely a first portion 7A which is essentially solely responsive to the temperature of the cold water and a second portion 7B which is responsive to the temperature of the mixed water. Manual adjuster 19 at the top end of the valve 1 serves for setting of the desired mixed water temperature. Referring especially to Figs 3A and B, if there is a fall in cold water pressure at the cold and B, if there is a fall in cold water pressure at the cold inlet 4 to the thermostatic mixing valve 1 then the flow of cold water over the minor portion (7A) of the thermostat element (7) will be reduced and a smaller portion (C - ) of the element (7) will be in the cold water stream. This means that a larger portion (M + ) of the thermostat element 7 will now be in the mixed water stream and at the mixed water temperature rather than at the cold water temperature.

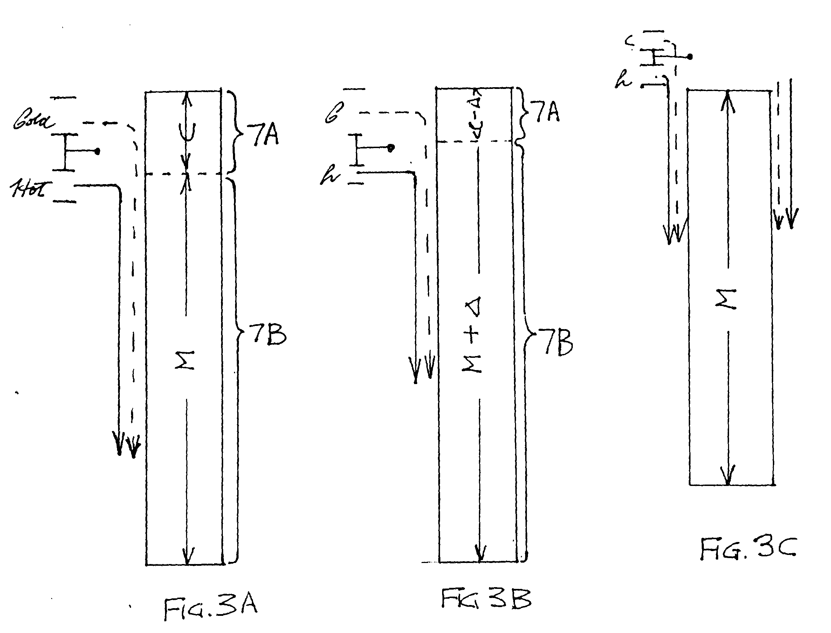

A larger proportion of the expanding material inside the thermostat element 7 is now subjected to the mixed water temperature and this will give an increased expansion from the thermostat element (in comparison to the prior art arrangement shown in Fig 3C) moving the valve head 10A to reduce the flow of hot water at the inlet 14 and increase the flow of reduced pressure cold water at the inlet port 15.

If the cold water pressure continuous to decrease then a still larger portion (7B) of the thermostat element 7 will be subjected to the mixed water temperature and a correspondingly greater increase in expansion will be achieved. When the cold water pressure drops to zero there will be no flow at the cold inlet (15) and the thermostat element 7 will expand to close the hot inlet 14. At this point, the thermostat element 7 will expand until the slide valve closes the hot inlet port 14 and there will be no flow through the thermostatic mixing valve 1.

In this arrangement, the thermostat element is used as a two stage thermostat with one stage (7B) always active and the other stage (7A) usually inactive and only brought into service when the flow of cold water entering the valve is reduced because the cold water pressure decreases while the hot water pressure remains constant. The arrangement therefore serves to compensate for the cold supply pressure drop by making a larger portion of the thermostat active to control the flow of water through the inlets 14, 15.

The curve C1 in Fig 1 shows the mixed water temperature characteristic possible for the valve 1. As can be seen the mixed water temperature gradually falls very slightly as the pressure Pc drops. The amount of temperature fall of the valve 1 is less than the amount of temperature rise in the prior art thermostatic valve of the curve B. Consequently the valve 1 gives a considerably safer and more acceptable performance for the cold water pressure drop condition; in comparison with prior art mixing valves. It may be possible in some flow conditions for the outlet temperature to remain steady or even rise slightly but any rise will be substantially less than in the graph B: the hatched portion in graph C indicates the probable variation in the characteristic. The precise characteristic will depend on the flow rate through the valve and also on the temperature of the hot and cold water entering the valve. The dotted line in Fig 1 indicates that the change in outlet temperature takes place immediately there is a fall in cold water pressure.

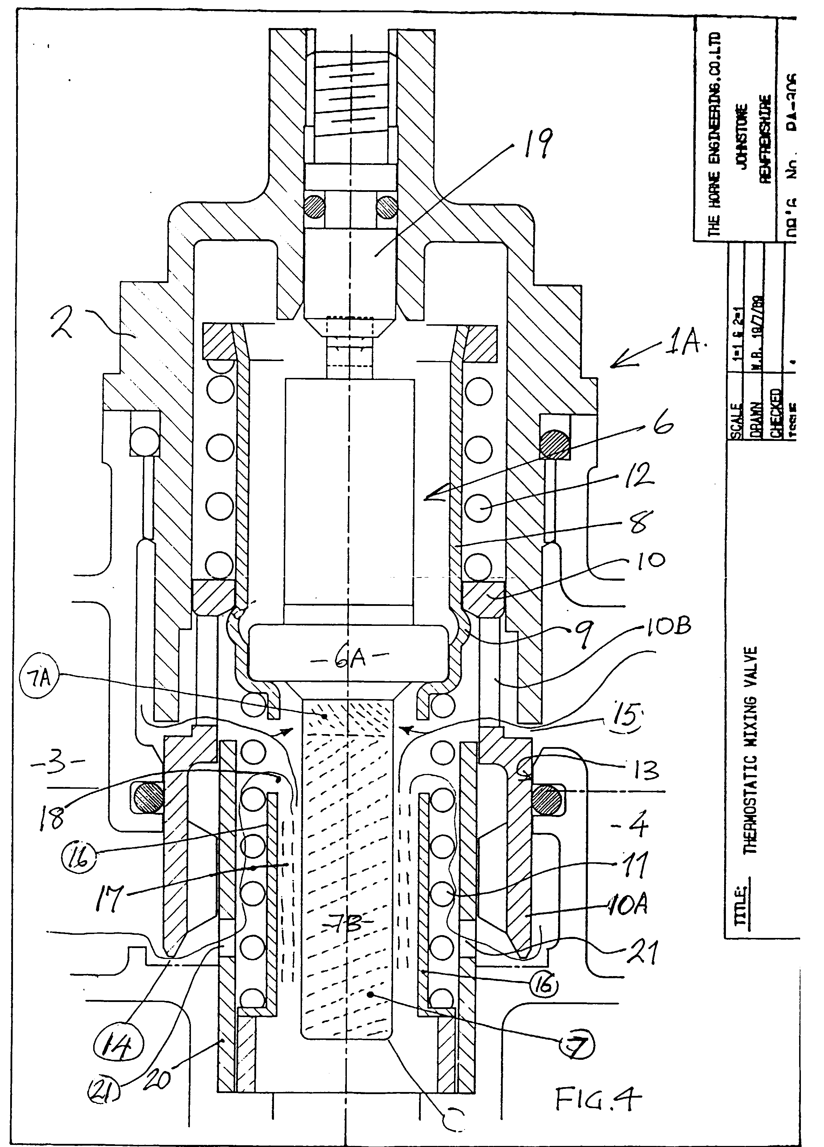

Whereas the above is concerned with a fall in cold water pressure the valve also operates in accordance with the invention where there is a rise in hot water pressure (with the cold water pressure unchanged). In particular it is a feature of the present valve to ensure that whenever the hot water pressure exceeds the cold water pressure for whatever reason, the resulting mixed water temperature will rise very slightly then fall slightly to a temperature only a little below the original mixed water temperature. Fig 4 shows a further thermostatic mixing valve 1A in accordance with the present invention and generally similar to the valve 1 of Fig 2, and like parts carry like reference numeral numbers. However, in this case, the tubular member 20 at the valve seat of inlet 14 carries ports 21 whereby the hot fluid flows directly from the inlet 14 to the space between the sleeve 16 and member 20. Whence it passes to the passage 17. Operation of the valve 1A is similar to that of valve 1.

In addition to the ability of the above inventive valves to provide improved mixed water temperature control when there is a change in pressure such that the hot water pressure becomes higher than the cold water pressure, these valves will also provide improved temperature control when the cold water temperature rises. This benefit is achieved by virtue of the dormant part 7A of the element 7 which is surrounded by cold water becoming more active if the cold water temperature rises. This is of significance as the cold water temperatures can vary by up to 15^{o}C between summer and winter and depending upon the amount of mixed water used.

Further modifications will of course be possible, particularly with regard to the way the pressure drop compensator sets the hot and cold fluid inlets.

## Claims

1. A thermostatic mixing valve comprising a valve casing (2) wherein relatively hot and cold fluids are mixed, inlets (14, 15) in the casing (2) for said hot and cold fluids, valve means (10) controlling fluid flows through the fluid inlets (14, 15), a thermostatic control (6) in the casing (2) for the valve means (10) including an elongate thermal responsive member (7) responding to fluid temperature, ducting (10A, 10B, 10C, 18) for delivering hot and cold fluids passing from the fluid inlets (14, 15) to said thermal responsive member (7) and an outlet (5) from the casing (2) for mixed fluid,
characterised in that said elongate thermal responsive member (7) includes a first upper portion (7A) and a second lower portion (7B) adjacent said first portion (7A), in that the fluid inlet (15) for cold fluid and a portion (10B) of said ducting are arranged to provides a dedicated flow of cold fluid radially onto said first portion (7A) of the thermal responsive member (7) whereby said first portion (7A) is responsive predominantly to the temperature of said cold fluid, and in that said second portion (7B) of the thermal responsive member (7) is responsive to the temperature of the mixed fluid.

2. A thermostatic mixing valve according to Claim 1, characterised in that the ducting introduces the cold fluid to the thermal responsibe member (7) upstream from the introduction of the mixed fluid to said thermal responsibe members (7) thereby forming said first and second portions (7a, 7B) of the thermal responsive member (7).

3. A thermostatic mixing valve according to claim 1 or 2, characterised in that the length of the thermal responsive member (7) is greater than twice the width or diameter of the member (7).

4. A thermostatic mixing valve according to any one of the preceding claims, characterised in that the second portion (7B) of the thermal responsive member (7) is substantially longer than said first portion (7A).

5. A thermostatic mixing valve according to any one of the preceding claims characterised in that the valve members (10, 10A/B comprise an annular member (10A) located between opposed seating whereby the hot and cold inlets (14, 15) are defined between said annular member and respective seatings.

6. A thermostatic mixing valve according to claim 5, characterised in that the hot fluid flows between the annular valve member (10A) and a sleeve (16) surrounding the thermal responsive member (7) towards a reversal zone (18) so as to reverse at said reversal zone at an end of said sleeve (16) for the creation of a mixed flow over the thermal responsive member (7), the cold fluid being introduced to the thermal responsive member (7), upstream from said reversal zone (18) of the hot fluid.

7. A thermostatic mixing valve according to claim 6, characterised in that the sleeve (16) extends for more than half the length of the thermal responsive member (7).

8. A thermostatic mixing valve according to any one of the preceding claims, characterised in that one end of the elongate thermal responsive member (7) is coupled to said valve members (10, 10A/B) while the other end of said elongate member is free.

9. A thermostatic mixing valve according to claim 8, characterised in that said first portion (7A) is adjacent said one end.

10. A thermostatic mixing valve as claimed in any one of the preceding claims, characterised in that hot and cold inlet ducts (3, 4) deliver fluids to said hot and cold inlets (14, 15) respectively, said hot and cold inlet ducts (3, 4) being arranged in opposed relationship.

11. A thermostatic mixing valve according to any one of the preceding claims, characterised in that the fluid inlet (15) for cold fluid is located substantially level with or below said first portion (7A) of the thermal responsive member (7).

## Patentansprüche

1. Thermostat-Mischventil, umfassend ein Ventilgehäuse (2), in dem verhältnismäßig heiße und kalte Flüssigkeiten gemischt werden, Einlässe (14, 15) im Gehäuse (2) für die besagten heißen und kalten Flüssigkeiten, eine Flüssigkeitsströme durch die Flüssigkeitseinlässe (14, 15) steuernde Ventileinrichtung (10), eine Thermostat-Steuerung (6) im Gehäuse (2) für die Ventileinrichtung (10), welche ein langgestrecktes, auf Wärme ansprechendes Element (7) enthält, das auf eine Flüssigkeitstemperatur anspricht, ein Kanalsystem (10A, 10B, 10C, 18) zum Zuführen von heißen und kalten Flüssigkeiten, die sich von den Flüssigkeitseinlässen (14, 15) zu dem besagten auf Wärme ansprechenden Element (7) bewegen, sowie einen Auslaß (5) aus dem Gehäuse (2) für Mischflüssigkeit, dadurch gekennzeichnet, daß das besagte langgestreckte, auf Wärme ansprechende Element (7) einen ersten oberen Teil (7A) und einen zweiten unteren Teil (7B) angrenzend an den besagten ersten Teil (7A) umfaßt, daß der Flüssigkeitseinlaß (15) für kalte Flüssigkeit und ein Teil (10B) des besagten Kanalsystems angeordnet sind, um einen bestimmten Strom kalter Flüssigkeit radial auf den besagten ersten Teil (7A) des auf Wärme ansprechenden Elements (7) zu liefern, wodurch der besagte erste Teil (7A) überwiegend auf die Temperatur der besagten kalten Flüssigkeit anspricht, und daß der besagte zweite Teil (7B) des auf Wärme ansprechenden Elements (7) auf die Temperatur der Mischflüssigkeit anspricht.

2. Thermostat-Mischventil nach Anspruch 1, dadurch gekennzeichnet, daß das Kanalsystem die kalte Flüssigkeit dem besagten auf Wärme ansprechenden Element (7) in Strömungsrichtung vor dem Zuführen der Mischflüssigkeit zu den besagten auf Wärme ansprechenden Elementen (7) zuführt, wodurch der besagte erste und zweite Teil (7A, 7B) des auf Wärme ansprechenden Elements (7) gebildet wird.

3. Thermostat-Mischventil nach Anspruch 1 oder 2, dadurch gekennzeichnet, daß die Länge des auf Wärme ansprechenden Elements (7) größer ist als die doppelte Breite oder der doppelte Durchmesser des Elements (7).

4. Thermostat-Mischventil nach einem beliebigen der vorangehenden Ansprüche, dadurch gekennzeichnet, daß der zweite Teil (7B) des auf Wärme ansprechenden Elements (7) wesentlich länger als der besagte erste Teil (7A) ist.

5. Thermostat-Mischventil nach einem beliebigen der vorangehenden Ansprüche, dadurch gekennzeichnet, daß die Ventilelemente (10, 10A/B) ein ringförmiges Element (10A) umfassen, das zwischen entgegengesetzten Sitzen angeordnet ist, wodurch der Heiß- und Kalteinlaß (14, 15) zwischen dem besagten ringförmigen Element und jeweiligen Sitzen begrenzt werden.

6. Thermostat-Mischventil nach Anspruch 5, dadurch gekennzeichnet, daß die heiße Flüssigkeit zwischen dem ringförmigen Ventilelement (10A) und einer das auf Wärme ansprechende Element (7) umgebenden Hülse (16) in Richtung einer Umkehrzone (18) strömt, so daß sie sich in der besagten Umkehrzone an einem Ende der besagten Hülse (16) zur Erzeugung eines Mischstroms über das auf Wärme ansprechende Element (7) umkehrt, wobei die kalte Flüssigkeit dem auf Wärme ansprechenden Element (7) in Strömungsrichtung vor der besagten Umkehrzone (18) der heißen Flüssigkeit zugeführt wird.

7. Thermostat-Mischventil nach Anspruch 6, dadurch gekennzeichnet, daß sich die Hülse (16) über mehr als die halbe Länge des auf Wärme ansprechenden Elements (7) erstreckt.

8. Thermostat-Mischventil nach einem beliebigen der vorangehenden Ansprüche, dadurch gekennzeichnet, daß ein Ende des langgestreckten, auf Wärme ansprechenden Elements (7) mit den besagten Ventilelementen (10, 10A/B) verbunden ist, während das andere Ende des besagten langgestreckten Elements frei ist.

9. Thermostat-Mischventil nach Anspruch 8, dadurch gekennzeichnet, daß der besagte erste Teil (7A) an das besagte eine Ende angrenzt.

10. Thermostat-Mischventil nach einen beliebigen der vorangehenden Ansprüche, dadurch gekennzeichnet, daß Heiß- und Kalteinlaßkanäle (3, 4) Flüssigkeiten zu dem besagten Heiß- bzw. Kalteinlaß (14, 15) liefern, wobei die besagten Heiß- und Kalteinlaßkanäle (3, 4) in gegenüberliegender Beziehung angeordnet sind.

11. Thermostat-Mischventil nach einem beliebigen der vorangehenden Ansprüche, dadurch gekennzeichnet, daß der Flüssigkeitseinlaß (15) für kalte Flüssigkeit im wesentlichen bündig mit oder unter dem besagten ersten Teil (7A) des auf Wärme ansprechenden Elements (7) angeordnet ist.

## Revendications

1. Vanne de mélange thermostatique comprenant un corps de vanne (2) à l'intérieur duquel des fluides relativement chauds et relativement froids sont mélangés, des entrées (14, 15) dans le corps de vanne (2) pour lesdits fluides chauds et froids, des moyens de vanne (10) commandant les écoulements des fluides à travers les entrées à fluide (14, 15), une commande thermostatique (6) du moyen de vanne (10) dans le corps de vanne (2) comportant un élément allongé (7) à réponse thermique qui répond à la température d'un fluide, une canalisation (10A, 10B, 10C, 18) pour délivrer les fluides chauds et froids arrivant des entrées à fluide (14, 15) audit élément (7) à réponse thermique et une sortie (5) du corps de vanne (2) pour le fluide mélangé, caractérisée en ce que ledit élément allongé (7) à réponse thermique comprend une première partie supérieure (7A) et une seconde partie inférieure (7B) adjacente à ladite première partie (7A), en ce que l'entrée à fluide (15) pour le fluide froid et une partie (10B) de ladite canalisation sont disposées pour créer une circulation affectée au fluide froid dans une direction radiale contre ladite partie (7A) de l'élément (7) à réponse thermique, grâce à quoi ladite première partie (7A) répond principalement à la température dudit fluide froid, et en ce que ladite seconde partie (7B) de l'élément (7) à réponse thermique répond à la température du fluide mélangé.

2. Vanne de mélange thermostatique selon la revendication 1, caractérisée en ce que la canalisation introduit le fluide froid sur l'élément (7) à réponse thermique en amont de l'introduction du fluide mélangé sur ledit élément à réponse thermique (7) en formant ainsi lesdites première et seconde parties (7a, 7B) de l'élément (7) à réponse thermique.

3. Vanne de mélange thermostatique selon l'une des revendications 1 ou 2, caractérisée en ce que la longueur de l'élément à réponse thermique (7) est supérieure au double de la largeur ou diamètre de l'élément (7).

4. Vanne de mélange thermostatique selon l'une quelconque des revendications précédentes, caractérisée en ce que la seconde partie (7B) de l'élément (7) à réponse thermique est sensiblement plus longue que ladite première partie (7A).

5. Vanne de mélange thermostatique selon l'une quelconque des revendications précédentes, caractérisée en ce que les éléments de vanne (10, 10A/B) comprennent un élément annulaire (10A) situé entre des sièges opposés grâce à quoi les entrées à fluide chaud et à fluide froid (14, 15) sont délimitées entre ledit élément annulaire et les sièges respectifs.

6. Vanne de mélange thermostatique selon la revendication 5, caractérisée en ce que le fluide chaud circule entre l'élément annulaire de vanne (10A) et un manchon (16) entourant l'élément (7) à réponse thermique en direction d'une zone d'inversion (18) de manière à s'inverser sur ladite zone d'inversion à une extrémité dudit manchon (16) afin de créer une circulation mélangée sur l'élément (7) à réponse thermique, le fluide froid étant introduit sur l'élément (7) à réponse thermique, en amont de ladite zone d'inversion (18) du fluide chaud.

7. Vanne de mélange thermostatique selon la revendication 6, caractérisée en ce que le manchon (16) s'étend sur plus de la moitié de la longueur de l'élément (7) à réponse thermique.

8. Vanne de mélange thermostatique selon l'une quelconque des revendications précédentes, caractérisée en ce qu'une extrémité de l'élément allongé (7) à réponse thermique est accouplée auxdits éléments de vanne (10, 10A/B) tandis que l'autre extrémité dudit élément allongé est libre.

9. Vanne de mélange thermostatique selon la revendication (8) caractérisée en ce que ladite première partie (7A) est adjacente à ladite première extrémité.

10. Vanne de mélange thermostatique selon l'une quelconque des revendications précédentes, caractérisée en ce que les canalisations d'entrées du fluide chaud et du fluide froid (3, 4) délivrent des fluides auxdites entrées à fluide chaud et à fluide froid (14, 15) respectivement, lesdites conduites d'entrées de fluide chaud et de fluide froid (3, 4) étant disposées à l'opposé l'une de l'autre.

11. Vanne de mélange thermostatique selon l'une quelconque des revendications précédentes, caractérisée en ce que l'entrée à fluide froid (15) est situéesensiblement à un niveau égal ou inférieur à celui de la première partie (7A) de l'élément (7) à réponse thermique.
